# EUROPÄISCHE PATENTSCHRIFT

(11) **EP 2 294 398 B1**
(45) Veröffentlichungstag und Bekanntmachung des Hinweises auf die Patenterteilung: **02.11.2016**
(21) Anmeldenummer: 09765643.3
(22) Anmeldetag: 19.06.2009
(51) Int. Cl.: G01N 29/02, G01N 29/036, G01N 29/22

(54) **Vorrichtung und Verfahren zur Durchführung von Messungen eines Analysenfluids in einer Messzelle mit Resonatoren**
Device and method for carrying out measurements of an analysis fluid in a mesurement cell comprising resonators
Dispositif et procédé pour effectuer des mesures sur un fluide d'analyse dans une cellule de mesure comprenant des résonateurs

(30) Priorität: 19.06.2008 DE 102008029213
(43) Veröffentlichungstag der Anmeldung: 16.03.2011
(73) Patentinhaber: Andreas Hettich GmbH & Co. KG, 78532 Tuttlingen (DE)
(72) Erfinder: GEHRING, Frank, 78532 Tuttlingen (DE)
(74) Vertreter: Puschmann Borchert Bardehle Patentanwälte Partnerschaft mbB
(86) Internationale Anmeldenummer: PCT/EP2009/004466
(87) Internationale Veröffentlichungsnummer: WO 2009/153063

(56) Entgegenhaltungen:
- DE-C1- 10 137 679
- US-A- 5 542 298
- US-B1- 6 644 119
- SCHULTZ J ET AL: "A continuous wave transmission method for the ultrasonic spectrometry of liquids" MEASUREMENT SCIENCE AND TECHNOLOGY, IOP, BRISTOL, GB, Bd. 9, Nr. 8, 1. August 1998 (1998-08-01), Seiten 1266-1276, XP020064559 ISSN: 0957-0233

## Beschreibung

Die Erfindung betrifft eine Vorrichtung zur Durchführung von Messungen eines Analysenfluids gemäß der im Oberbegriff des Anspruches 1 angegebenen Art.

Derartige Vorrichtungen zur Durchführung von Messungen eines Analysenfluids sind beispielsweise aus der WO 2007/112897 A2 bekannt. Die Vorrichtung besteht dabei aus einem Gehäuse, einer im Gehäuse angeordneten Messkammer, einem Resonator in Form eines Schwingquarzes, einem Oberteil zum Begrenzen der Messkammer nach oben und Leitungen zum Ein- und Ausbringen von Medien für die Messungen in der Messkammer. In der Messkammer ist jeweils ein Resonator vorgesehen, der die Messkammer im unteren Bereich begrenzt. Der Resonator liegt dabei auf einem Gehäuseabsatz auf. Auf der dem Gehäuseabsatz gegenüberliegenden Seite ist ein Dichtring angeordnet, auf dem das Oberteil aufliegt.

Das Oberteil ist in Form eines lösbaren Einsatzes ausgebildet und mit dem Gehäuse über einen Bajonettverschluss verriegelbar. Der Einsatz weist mittig ein optisches Fenster auf, durch welche man Einblick in die Messkammer nehmen kann. Der Einsatz mit der Linse begrenzt die Messkammer nach oben und die Dichtringe die Messkammer zur Seite. Der Dichtring ist dabei fest mit dem Einsatz verbunden, um ein einfaches Austauschen des Resonators zu ermöglichen.

Der Schwingquarz, der den Resonator bildet, ist fest und durchgängig mit seinem Seitenbereich mit einem Folienring verbunden, der radial weiter außen wiederum mit einem Trägerring verbunden ist. Der Folienring gewährleistet die Abdichtung der Messkammer sowie die Schwingbewegung des Schwingquarzes. Der Trägerring schafft eine vorbestimmte Anordnung im Gehäuse.

Mit dieser bekannten Vorrichtung zur Durchführung von Messungen eines Analysenfluids lassen sich in einfacher Weise Messverfahren realisieren, die bis dato nur sehr aufwendig möglich waren, beispielsweise Verfahren zur Biutgruppenbestimmung.

Zudem ist aus der WO 2004/067130 A2 bekannt, mit Hilfe eines Resonators unterschiedliche Messungen in Analysenfluiden, auch Blut, durchzuführen, die über die reine Blutgruppenbestimmung hinausgehen. Für die Bestimmung von z. B. irregulären Antikörpern und Isoagglutininen ist der Aufwand relativ hoch, bedarf noch einiger Handarbeit und dauert auch noch relativ lange.

Eine Vorrichtung zur Durchführung von Messungen eines Analysefluids bei dem das Gehäuse eine Messkammer und zwei gegenüberliegend angeordnete, die Messkammer bereichsweise begrenzende Resonatoren aufweist, ist aus der DE 101 37 679 C1 bekannt.

Eine Vorrichtung zur Bestimmung von physikalischen Zustandsparametern eines Mediums ist in der US 5,542,298 offenbart. Die Vorrichtung weist einen Hohlgrundkörper mit einer Öffnung in seiner Wand, an seinen Stirnenden befestigte Umwandler akustischer Schwingungen mit Elektroden, die mit dem Grundkörper eine Messkammer bilden, und Befestigungselemente auf. Jeder Umwandler akustischer Schwingungen ist im Umriss zwischen dem Stirnende des Grundkörpers und einem Befestigungselement starr befestigt. Die mit dem zu untersuchenden Medium kontaktierende Oberfläche jedes Umwandlers akustischer Schwingungen ist als eine Ganzelektrode koaxial mit der Messkammer gestaltet und fällt mit ihr nach dem Durchmesser zusammen. Im Grundkörper können mehrere Messkammern angeordnet sein.

Ein Verfahren zur eingriffsfreien Charakterisierung eines strömenden Mehrphasenfluid durch Ultraschallinterferometer sowie eine Vorrichtung zur Durchführung des Verfahrens ist in der US 6,644,119 B1 offenbart.

Aus der Veröffentlichung "A continous wave transmission method fort he ultrasonic spectrometry of liquids", MEASUREMENT SCIENCE AND TECHNOLOGY, IOP, BRISTOL, GB, Bd.9 (1998) Seite 1266-1276 offenbart ein weiteres Verfahren zur Bestimmung physikalischer Eigenschaften von Flüssigkeit sowie eine Vorrichtung zur Durchführung des Verfahrens.

Der Erfindung liegt daher die Aufgabe zugrunde eine Vorrichtung zu schaffen, mit der sich mehr Messmöglichkeiten ergeben und die oben genannten Nachteile vermieden werden.

Diese Aufgabe wird durch die kennzeichnenden Merkmale des Anspruches 1 in Verbindung mit Oberbegriffsmerkmalen gelöst.

Der Erfindung liegt die Erkenntnis zugrunde, dass durch Vorsehen von zwei Resonatoren gleichzeitig mehrere Messungen oder zeitlich nacheinander mehrere Messungen ohne Änderungen der die Messkammer begrenzenden Teile durchgeführt werden können. Hierdurch kann der Messaufwand erheblich vermindert, die Messgeschwindigkeit erhöht und die die Messergebnisse negativ beeinflussenden Faktoren minimiert werden. Zudem ergeben sich aber auch weitere Messmöglichkeiten, die bisher nur nacheinander oder mit viel Aufwand möglich waren.

Nach der Erfindung sind daher in der Vorrichtung zur Durchführung von Messungen in eines Analysenfluids zwei Resonatoren vorgesehen, die jeweils die Messkammer begrenzen, wobei im Bezug auf die Richtung der Schwerkraft der erste Resonator oben im Gehäuse und der zweite Resonator gegenüberliegend unten im Gehäuse angeordnet ist. Hierbei ist der erste Resonator als Aktor und/oder Sensor und der zweite Resonator als Sensor und/oder Aktor ausgebildet.

Aufgrund der Ausbildung des ersten Resonator als Aktor und/oder Sensor und der Ausbildung des zweiten Resonators als Sensor und/oder Aktor sowie der oberen und unteren Anordnung der Sensoren im Gehäuse ist in vorteilhafter Weise gewährleistet, dass bei Lösen eines Analyts vom oberen ersten Resonator dieser sich durch die Schwerkraft auf den unteren Resonator absetzt. Der Analyt kann nun unten mit weiteren Verfahrensschritten der Messung unter Zuhilfenahme des unteren Resonators beaufschlagt werden und der obere Resonator kann andere Verfahrenschritte des Messverfahren durchführen, beispielsweise die Matrix des Analysenfluids untersuchen.

Vorzugsweise ist dabei der erste und/oder zweite Resonator lösbar mit der Messkammer befestigt. Die lösbare Ausbildung erweist sich als vorteilhaft, da hierdurch eine vereinfachte Handhabung, insbesondere in Bezug auf die Reinigung der Resonatoren oder Beschichtung der Resonatoren, gewährleistet ist. Denkbar ist zudem, dass anstelle eines Resonators ein Plexiglaseinsatz an der Messkammer befestigt wird. Hierdurch ist ein Blick in die Messkammer gewährleistet.

Gemäß der beanspruchten Ausführungsform begrenzen die beiden Resonatoren die Messkammer jeweils mit einer der Messkammer zugewandten Resonator-Oberfläche. Vorzugsweise weisen die der Messkammer zugwandten Oberflächen der beiden Resonatoren gleiches elektrisches Potential auf.

Dadurch wird eine elektrische Kopplung der beiden Resonatoren unter anderem über ein elektrisch leitendes Fluid vermieden. Dies ist besonders wichtig, wenn einer der beiden Resonatoren als Aktor mit sehr hohen Wechselspannungen betrieben wird.

Erfindungsgemäß ist das Gehäuse drehbar, insbesondere um 180 Grad drehbar, ausgebildet. Auf einfache Art und Weise sind hierdurch kombinierte Messverfahren unter Zuhilfenahme der Schwerkraft für die Übergabe des Analyts von dem zweiten Resonator an den ersten Resonator ermöglicht.

Um eine sichere Anordnung der Resonatoren im Gehäuse zu ermöglichen, liegen diese jeweils an einem Teil des Gehäuses, insbesondere an einem Steg des Gehäuses, an. Insbesondere ist der Steg parallel zum Resonator vollständig seitlich umlaufend zur Messkammer angeordnet. Zum einen werden hierdurch die Resonatoren in ihrer räumlichen Lage zueinander festgelegt, zum anderen ergeben sich dadurch weitere konstruktive Möglichkeiten, wie im Folgenden aufgezeigt wird. Das Gehäuse kann mehrteilig aufgebaut sein. Es kann aus einem Grundgehäuse und eine einem Messkammergehäuse bestehen. Das Messkammergehäuse und das Grundgehäuse sind miteinander verbunden, insbesondere lösbar.

Aus der WO 2007/112897 A2 sind Resonatoren bekannt, welche einen Trägerring umfassen. Der Resonator ist dabei an seinem Außenumfang mit dem Trägerring über einen Folienring verbunden, um eine Resonatoreinheit zu bilden. Der Folienring und der Trägerring bilden zusammen mit dem Resonator eine abgedichtete Fläche, sodass kein Fluid von der einen Seite der Resonatoreinheit auf die andere Seite der Resonatoreinheit hindurch gelangen kann. Derartige Resonatoren in Resonatoreinheiten haben sich bewährt. Insofern kann auch die Vorrichtung nach der vorliegenden Erfindung entsprechend der WO 2007/112897 A2 ausgebildeten Resonatoreinheiten umfassen. Hierbei sind die Resonatoren in einem den Resonator radial umfassenden Träger gelagert. Der Träger umfasst dabei den Trägerring sowie den Folienring. Dabei ist insbesondere zwischen Trägern der Resonatoren, insbesondere jeweils zwischen dem Träger und dem Steg des Gehäuses ein Dichtmittel angeordnet. Mit diesem Dichtmittel soll verhindert werden, dass beispielsweise zwischen dem Trägerring und dem Steg des Gehäuses Medium aus der Messkammer austreten kann. Hierdurch würde das Messergebnis verfälscht.

In einfacher Weise kann das Dichtmittel in Form einer Schicht auf den Träger, insbesondere den Folienring aufgebracht sein. Vorzugsweise wird dabei die Schicht durch Silikon gebildet, insbesondere durch Polydimethylsiloxan - PDMS.

Um zum einen das Analysenfluid in die Messkammer ein- und auszubringen, aber auch, um Spülungen während oder nach der Messung durchzuführen oder Reagenzien ein- und auszubringen, sind Leitungen durch den Bereich des Gehäuses hindurch geführt, an dem die Resonatoreinheiten, insbesondere mit ihren Trägerringen, anliegen.

Um eine sichere Anordnung des ersten Resonators im Gehäuse zu gewährleisten, ist ein Schließmechanismus eingebaut, der den ersten Resonator im Gehäuse sichert.

Die Erfindung betrifft auch ein Verfahren zur Messung der physikalischen Eigenschaften des Analysenfluids und/oder zumindest eines Analyts und/oder der Matrix des Analysenfluids mit einer Vorrichtung wie sie oben beschrieben ist.

Gemäß einer ersten Ausführungsform umfasst das Verfahren folgende Verfahrensschritte:
a. Außerhalb der Messkammer werden auf die Resonator-Oberfläche eines der beiden Resonatoren (34,16) Trägerpartikel immobilisiert;
b. Der Resonator (34, 16) wird so mit der Messkammer (40) verbunden, sodass die mit Trägerpartikel immobiliserte Resonator-Oberfläche in die Messkammer hineinreicht;
c. Das Analysenfluid wird in die Messkammer (40) eingebracht, sodass Teile des Analysenfluids an der Resonator-Oberfläche des Resonators gebunden werden;
d. Die Messkammer (40) wird gespült, um restliche Bestandteile des Anlalysefluids aus der Messkammer (40) zu entfernen;
e. Die Anordnung wird jetzt ggf. durch eine Drehung um 180° so ausgerichtet, dass der Resonator mit gebundenen Trägerpartikel in Bezug zur Richtung der Schwerkraft oben im Gehäuse angeordnet ist;
f. Der in Bezug zur Richtung der Schwerkraft oben im Gehäuse angeordnete Resonator (34, 16) wird nun mit einer sehr hohen Schwingungsamplitude angeregt, um die an der Resonator-Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordneten Resonator (16, 34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

Gemäß einer weiteren Ausführungsform umfasst das Verfahren folgende Verfahrensschritte:
a. Innerhalb der Messkammer wird die Resonator-Oberfläche des in Bezug zur Schwerkraft betrachtet unten im Gehäuse angeordneten Resonators mit Fängermolekülen vorbeschichtet;
b. An der mit Fängermolekülen vorbeschichteten Resonator-Oberfläche werden Trägerpartikel immobilisiert;
c. Das Analysenfluid wird in die Messkammer (40) eingebracht, sodass sich Teile des Analysenfluids an der Resonator-Oberfläche des in Bezug auf die Richtung der Schwerkraft betrachtet unten im Gehäuse angeordneten Resonators gebunden werden;
d. Die Messkammer (40) wird gespült, um restliche Bestandteile des Anlalysefluids aus der Messkammer (40) zu entfernen;
e. Die Anordnung wird jetzt durch eine Drehung um 180° so ausgerichtet, dass der Resonator mit gebundenen Trägerpartikel in Bezug zur Richtung der Schwerkraft oben im Gehäuse angeordnet ist;
f. Der in Bezug zur Richtung der Schwerkraft oben im Gehäuse angeordnete Resonator (34, 16) wird nun mit einer sehr hohen Schwingungsamplitude angeregt, um die an der Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordneten Resonator (16,34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

Bekanntlich setzt sich das Frequenzsignal bzw. Impedanzsignal von Resonatoren aus zwei unterschiedlichen Einflussgrößen zusammen. Zum einen erfolgt eine Signaländerung aufgrund von Änderungen der physikalischen Eigenschaften des Fluids (Frequenzänderung) und ist proportional zur Wurzel aus dem Produkt (Dichte des Fluids * Viskosität des Fluids). Zum anderen ist die Frequenzänderung proportional zur angelagerten Masse an der Resonatoroberfläche. Aufgrund der erfindungsgemäßen Anordnung der beiden Resonatoren ist nun in vorteilhafte Weise die Verknüpfung der Signale beider Resonatoren in einem Messverfahren möglich, d.h., beide Effekte zu separieren und so genaue Aussagen über die physikalischen Eigenschaften des Fluids und der angelagerten Fremdschicht zu machen.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung aufgeführten Ausführungsbeispiele näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine perspektivische Ansicht auf die Vorrichtung nach der Erfindung;
- Fig. 2: eine Explosionsdarstellung der Vorrichtung mit einer Resonatoreinheit und einem Einsatz von Fig. 1;
- Fig. 3: eine Schnittdarstellung durch das Gehäuse von Fig. 1 bei Verwendung von zwei einander gegenüberliegenden Resonatoreinheiten;
- Fig. 4: eine vergrößerte Einzeldarstellung von Fig. 3, wobei der vergrößerte Bereich dort mit A gekennzeichnet ist;
- Fig. 5: eine Schnittdarstellung mit einer Resonatoreinheit und einem Einsatz;
- Fig. 6: eine Schnittdarstellung der Vorrichtung mit zwei Resonatoreinheiten, und
- Fig. 7: eine vergrößerte Schnittdarstellung von Fig. 5, wobei der vergrößerte Bereich dort mit B gekennzeichnet ist.

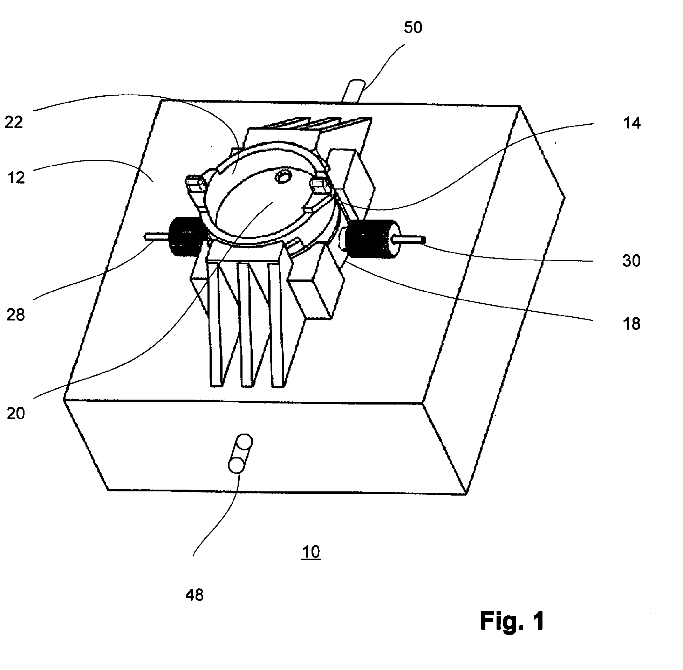

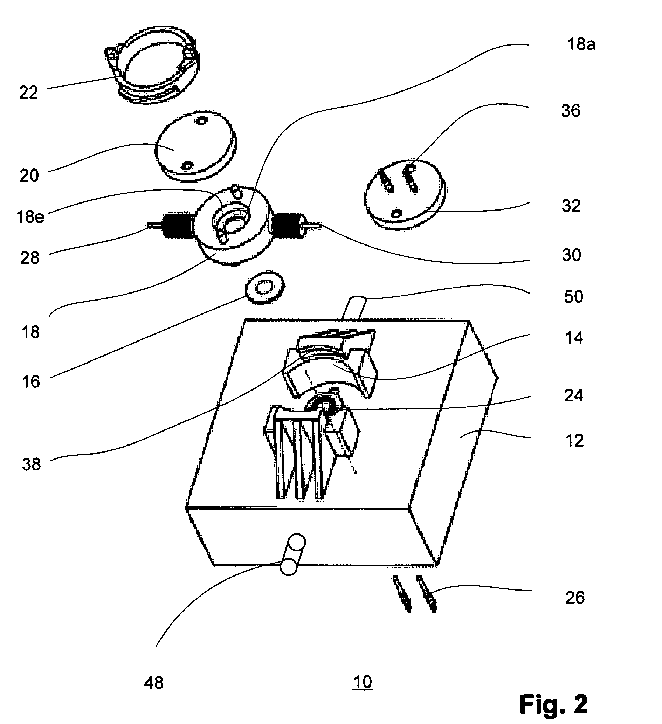

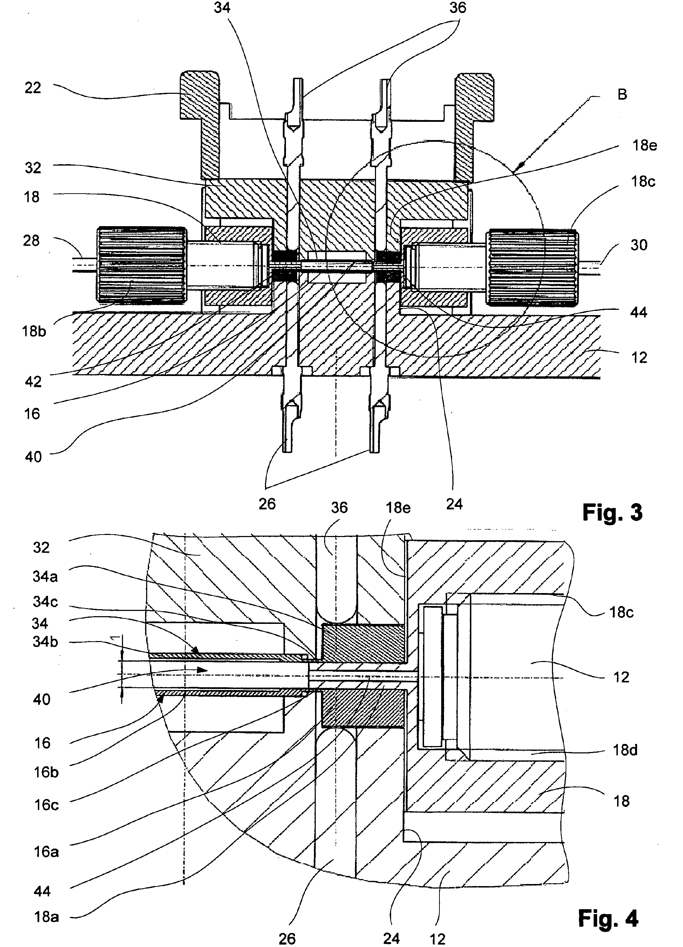

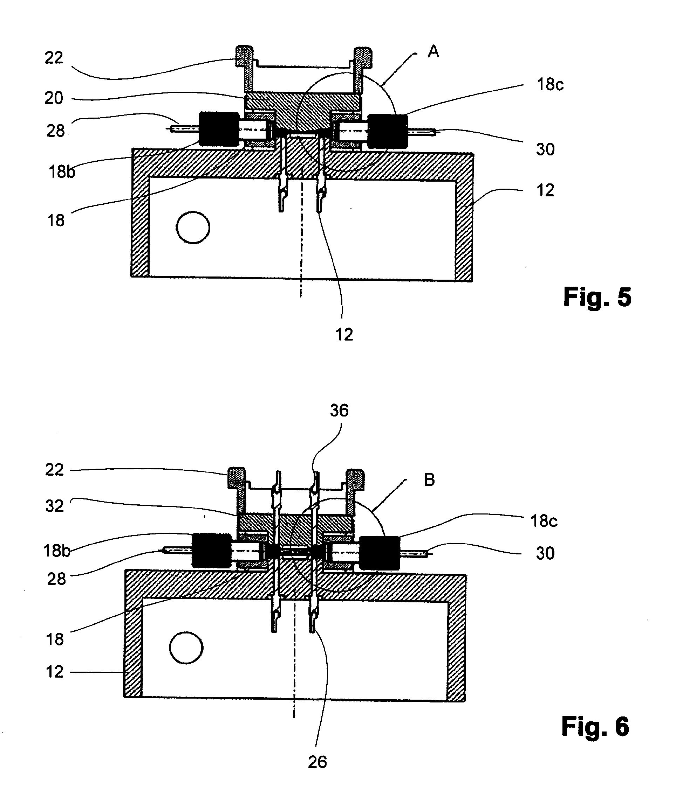

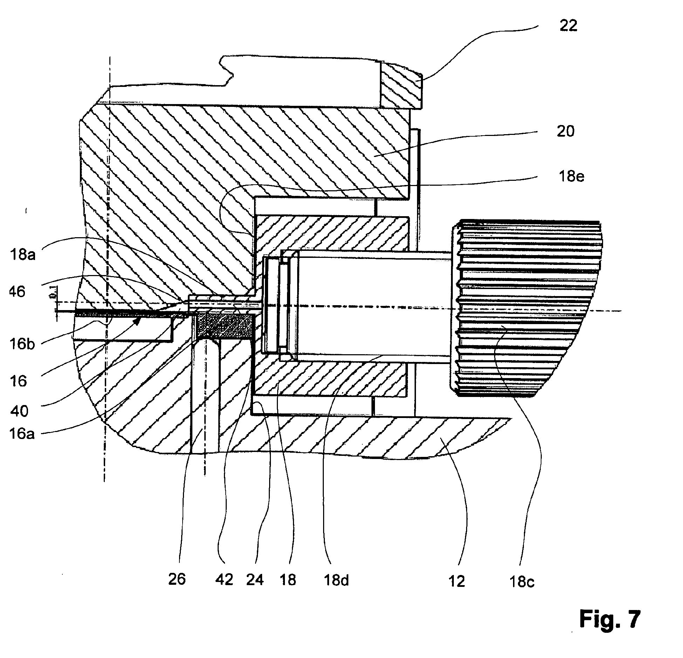

In den Figuren 1 bis 7 ist eine Ausführungsform einer Vorrichtung 10 zur Durchführung von Messungen eines Analysenfluids dargestellt. Die Vorrichtung 10 umfasst ein Grundgehäuse 12 mit einer oben auf dem Grundgehäuse 12 angeordneten Aufnahme 14. Die Aufnahme 14 dient zur Aufnahme einer zweiten Schwingquarzeinheit 16, eines Messkammergehäuses 18, eine erste Schwingquarzeinheit 34 sowie eines Schließringes 22.

Auf dem Grundgehäuses 12 in der Aufnahme 14 ist eine Erhöhung 24 für die zweite Schwingquarzeinheit 16 angeordnet. Die Erhöhung 24 dient zur Positionierung und zur elektrischen Kontaktierung der Schwingquarzeinheit 16 über zwei Kontaktflächen. Die Kontaktflächen sind dabei mit den Kontaktstiften 26 elektrisch verbunden. Auf einfache Weise kann dadurch die elektrische Spannung an dem Schwingquarz 16b angelegt werden. Die Kontaktierungsstifte 26 sind dafür mit einer hier nicht dargestellten Spannungsquelle verbunden.

Die Erhöhung 24 ist im Hinblick auf die radiale Erstreckung und Ausbildung an die Außenform des Schwingquarzeinheit 16 angepasst.

Auf die auf die Erhöhung 24 aufgebrachte Schwingquarzeinheit 16 wird das Messkammergehäuse 18 aufgelegt. Das Messkammergehäuse 18 ist mit einer Bohrung 18e versehen, in der mittig ringförmig ein Steg 18a hineinragt. Dabei liegt das Messkammergehäuse 18 mit seinem Steg 18a an der Schwingquarzeinheit 16 an.

Das Messkammergehäuse 18 ist mit zwei Anschlüssen 18b, 18c versehen, in die Leitungen 28 bzw. 30 enden. Die Anschlüsse 18b, 18c sind in das Messkammergehäuse 18 eingeschraubt und über eine Gewindeverbindung 18d dort lösbar angeordnet.

Die zweite Schwingquarzeinheit 16 besteht aus einem Trägerring 16a, einer den Trägerring 16a und den Schwingquarz 16b verbindenden Ringfolie 16c. Der Trägerring 16a, die Ringfolie 16c und der Schwingquarz 16b bilden zusammen eine dichte Fläche durch welche kein Medium hindurchtreten kann.

Der Trägerring 16a liegt im montiertem Zustand auf der Erhöhung 24 des Grundgehäuses 12 auf. Auf der gegenüberliegenden Seite liegt der Steg 18a des Messkammergehäuses 18 auf dem Trägerring 16a auf. Auf dem Steg 18a wiederum liegt die weitere, erste Schwingquarzeinheit 34 auf und wird dadurch mit den Kontaktstiften 36 elektrisch verbunden.

Die erste Schwingquarzeinheit 34 besteht aus einem Trägerring 34a, einer den Trägerring 34a und den Schwingquarz 34b verbindenden Ringfolie 34c. Der Trägerring 34a, die Ringfolie 34c und der Schwingquarz 34b bilden zusammen eine dichte Fläche durch welche kein Medium hindurchtreten kann.

Dieser erste Schwingquarz 34b wird im eingebauten Zustand von einer Halterung 32 gegen den Steg 18a des Messkammergehäuses 18 gedrückt. An die Halterung 32 greift der Schließring 22 an, der über einen Bajonettverschluss 38 mit der Aufnahme 14 in Richtung Grundgehäuse 12 den ersten Schwingquarzeinsatz 34 mit der Halterung 32 das Messkammergehäuse 18, den zweiten Schwingquarz 16 gegen die Erhöhung 24 in der Aufnahme 14 des Gehäuses 12 spannt.

Die Halterung 32 dient zur Positionierung und zur elektrischen Kontaktierung der Schwingquarzeinheit 34 über zwei Kontaktflächen. Die Kontaktflächen sind dabei mit den Kontaktstiften 36 elektrisch verbunden. Auf einfache Weise kann dadurch die elektrische Spannung an dem Schwingquarz 34b angelegt werden. Die Kontaktierungsstifte 36 sind dafür mit einer hier nicht dargestellten elektrischen Spannungsquelle verbunden. Auf einfache Weise kann dadurch die elektrische Spannung an den Schwingquarz 34 angelegt werden.

Die Schwingquarzeinheiten 16 und 34 begrenzen nach oben und unten jeweils eine Messkammer 40. Seitlich wird die Messkammer 40 durch den Steg 18a begrenzt. Um einen dichten Abschluss zwischen den Schwingquarzeinheiten 16,34 und dem Steg 18a zu ermöglichen, sind die Schwingquarzeinheiten 16, 34 zumindest im Bereich ihres Trägerrings 16a, 34a mit einer Dichtschicht überzogen, beispielsweise aus Silikon, insbesondere aus Polydimethylsiloxan - PDMS.

Wie oben bereits ausgeführt wurde, sind Leitungen 28, 30 über Anschlüsse 18b, 18c an das Messkammergehäuse angeschlossen. Über Leitungen 42 und 44 sind die Anschlüssen 18b, 18c mit ihren Leitungen 28, 30 mit der Messkammer 40 verbunden. Hierüber können zum einen das Analysenfluid in die Messkammer ein- und ausgebracht, aber auch Spülungen während oder nach der Messung durchgeführt werden, Reagenzien ein- und ausgebracht werden.

Das Grundgehäuse 12 ist in einer hier im einzelnen nicht dargestellten Aufhängung angeordnet. In dieser Aufhängung kann das Grundgehäuse 12 gedreht werden, insbesondere um 180°. Zur Aufhängung sind Drehzapfen 48 und 50 seitlich am Grundgehäuse 12 angeformt. Die Drehung wird durch einen Motor bewirkt, der mit einer Steuereinrichtung zusammenwirkt.

Mit der erfindungsgemäßen Vorrichtung 10 ist es nunmehr möglich, folgende Verfahren zur Messung der physikalischen Eigenschaften des Analysenfluids und/oder zumindest eines Analyts und/oder der Matrix des Analysenfluids durchzuführen.

Das Verfahren kann dabei folgende Verfahrensschritte umfassen:
a. Außerhalb der Messkammer werden auf die Resonator-Oberfläche eines der beiden Resonatoren (34,16) Trägerpartikel immobilisert;
b. Der Resonator (34, 16) wird so mit der Messkammer (40) verbunden, sodass die mit Trägerpartikel immobiliserte Resonator-Oberfläche in die Messkammer hineinreicht;
c. Das Analysenfluid wird in die Messkammer (40) eingebracht, sodass sich Teile des Analysenfluids an der Resonator-Oberfläche Resonators gebunden werden;
d. Die Messkammer (40) wird gespült, um restliche Bestandteile des Anlalysefluids aus der Messkammer (40) zu entfernen;
e. Die Anordnung wird jetzt ggf. durch eine Drehung um 180° so ausgerichtet, dass der Resonator mit gebundenen Trägerpartikel in Bezug zur Richtung der Schwerkraft oben im Gehäuse angeordnet ist.
f. Der in Bezug zur Richtung der Schwerkraft oben im Gehäuse angeordnete Resonator (34, 16) wird nun mit einer sehr hohen Schwingungsamplitude angeregt, um die an der Resonator-Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordneten Resonator (16, 34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

Denkbar ist auch, dass das Verfahren folgende Verfahrensschritte umfasst:
a. Innerhalb der Messkammer wird die Resonator-Oberfläche des in Bezug zur Schwerkraft betrachtet unten im Gehäuse angeordneten Resonators mit Fängermolekülen vorbeschichtet;
b. An der mit Fängermolekülen vorbeschichteten Resonator-Oberfläche werden Trägerpartikel immobilisiert;
c. Das Analysenfluid wird in die Messkammer (40) eingebracht, sodass sich Teile des Analysenfluids an der Resonator-Oberfläche des in Bezug auf die Richtung der Schwerkraft betrachtet unten im Gehäuse angeordneten Resonators gebunden werden;
d. Die Messkammer (40) wird gespült, um restliche Bestandteile des Anlalysefluids aus der Messkammer (40) zu entfernen;
e. Die Anordnung wird jetzt durch eine Drehung um 180° so ausgerichtet, dass der Resonator mit gebundenen Trägerpartikel in Bezug zur Richtung der Schwerkraft oben im Gehäuse angeordnet ist;
f. Der in Bezug zur Richtung der Schwerkraft oben im Gehäuse angeordnete Resonator (34, 16) wird nun mit einer sehr hohen Schwingungsamplitude angeregt, um die an der Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordneten Resonator (16, 34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

### Bezugszeichenliste

- 10: Vorrichtung
- 12: Grundgehäuse
- 14: Aufnahme
- 16: Zweite Schwingquarzeinheit
- 16a: Trägerring
- 16b: Quarz
- 16c: Ringfolie
- 18: Messkammergehäuse
- 18a: Steg
- 18b: Anschluss links
- 18c: Anschluss rechts
- 18d: Gewindeverbindung
- 18e: Bohrung im Messkammergehäuse
- 20: Plexiglaseinsatz
- 22: Schließring
- 24: Erhöhung
- 26: Kontaktierungsstifte
- 28: Leitung - links
- 30: Leitung - rechts
- 32: Halterung
- 34: Erste Schwingquarzeinheit
- 34a: Trägerring
- 34b: Quarz
- 34c: Ringfolie
- 36: Kontaktierungsstifte
- 38: Bajonettverschluss
- 40: Messkammer
- 42: Leitung - links
- 44: Leitung - rechts
- 46: Schräge im Randbereich des Plexiglaseinsatzes
- 48: Drehzapfen - links
- 50: Drehzapfen - rechts

## Patentansprüche

1. Vorrichtung (10) zur Durchführung von Messungen eines Analysenfluids, mit einem in einer Aufhängung angeordneten Gehäuse (12,18), einer im Gehäuse (18) angeordneten Messkammer (40), einem ersten Resonator (34), einem zweiten Resonator (16), und Leitungen (42, 44) zum Ein- und Ausbringen von Medien für die Messungen in der Messkammer (40), wobei die Resonatoren (16, 34) bereichsweise die Messkammer (40) begrenzen, und in Bezug auf die Richtung der Schwerkraft der erste Resonator (34) oben im Gehäuse und der zweite Resonator (16) gegenüberliegend unten im Gehäuse angeordnet ist, wobei der erste Resonator (34) als Aktor oder Sensor und der zweite Resonator (16) als Sensor oder Aktor ausgebildet ist, **dadurch gekennzeichnet, dass** am Gehäuse (12) seitlich Drehzapfen (48, 50) angeordnet sind, um die das Gehäuse (12) in Bezug zur Aufhängung um zumindest 180 Grad drehbar ist, und dass eine Steuereinrichtung sowie ein mit dieser Steuereinrichtung zusammenwirkender Motor vorgesehen sind, wobei die Drehung durch den mit der Steuereinrichtung zusammenwirkenden Motor bewirkt wird.

2. Vorrichtung nach Anspruch 1, **dadurch gekennzeichnet, dass** der erste und/oder zweite Resonator lösbar mit der Messkammer befestigt ist.

3. Vorrichtung nach Anspruch 1 oder 2, **dadurch gekennzeichnet, dass** die beiden Resonatoren (16, 34) die Messkammer jeweils mit einer Resonator-Oberfläche begrenzen und die der Messkammer zugewandten Resonaotr-Oberflächen gleiches elektrisches Potential aufweisen.

4. Vorrichtung nach einem der Ansprüche 1 bis 3, **dadurch gekennzeichnet, dass** die Resonatoren (16,34) jeweils an einem Teil des Gehäuses (18), insbesondere an einem Steg (18a) des Gehäuses (18), anliegen.

5. Vorrichtung nach Anspruch 4, **dadurch gekennzeichnet, dass** der Steg (18a) parallel zum Resonator (16, 34) vollständige seitlich umlaufend zur Messkammer (40) angeordnet ist.

6. Vorrichtung nach Anspruch 4 oder 5, **dadurch gekennzeichnet, dass** der Steg (18a) die Leitungen (42,44) zum Ein- und Ausbringen von Medien für die Messungen in der Messkammer (40) umfasst.

7. Vorrichtung nach einem der vorangehenden Ansprüche, **dadurch gekennzeichnet, dass** die Resonatoren (16, 34) in einem den Resonator (16,34) radial umfassenden Träger (16a, 34a) gelagert sind, dass zwischen Trägern (16a, 34a) der Resonatoren (16,34), insbesondere jeweils zwischen dem Träger (16a, 34a) und dem Steg (18a) des Gehäuses (12), ein Dichtmittel angeordnet ist.

8. Vorrichtung nach Anspruch 7, **dadurch gekennzeichnet, dass** das Dichtmittel in Form einer Schicht auf dem Träger (16a, 34a) aufgebracht ist.

9. Vorrichtung nach Anspruch 8, **dadurch gekennzeichnet, dass** die Schicht durch Silikon gebildet ist, insbesondere durch Polydimethylsiloxan (PDMS).

10. Vorrichtung nach einem der vorgenannten Ansprüche, **dadurch gekennzeichnet, dass** durch den Bereich (18a) des Gehäuses (18), an dem die Träger (16a, 34a) der Resonatoren anliegen, zumindest eine Leitung (42, 44) zu der Messkammer (40) hindurchgeführt ist.

11. Vorrichtung nach einem der vorgenannten Ansprüche, **dadurch gekennzeichnet, dass** der erste Resonator (16,34) im Gehäuse (12, 18) über einen Schließmechanismus (22, 38) gesichert ist.

12. Verfahren zur Messung der physikalischen Eigenschaften des Analysenfluids und/oder zumindest eines Analyts und/oder der Matrix des Analysenfluids mit einer Vorrichtung (10) gemäß einem der vorangehende Ansprüche, **gekennzeichnet durch** folgende Verfahrensschritte:
a. Außerhalb der Messkammer werden auf die Resonator-Oberfläche eines der beiden Resonatoren (34,16) Trägerpartikel immobilisert;
b. Der Resonator (34, 16) wird so mit der Messkammer (40) verbunden, sodass die mit Trägerpartikel immobiliserte Resonator-Oberfläche in die Messkammer hineinreicht;
c. Das Analysenfluid wird in die Messkammer (40) eingebracht, so dass Teile des Analysenfluids an der Resonator-Oberfläche gebunden werden;
d. Die Messkammer (40) wird gespült, um restliche Bestandteile des Anlalysefluids aus der Messkammer (40) zu entfernen;
e. Die Anordnung wird jetzt ggf. **durch** eine Drehung um 180° so ausgerichtet, dass der Resonator mit gebundenen Trägerpartikel in Bezug zur Richtung der Schwerkraft oben im Gehäuse angeordnet ist.
f. Der in Bezug zur Richtung der Schwerkraft oben im Gehäuse angeordnete Resonator (34, 16) wird nun mit einer sehr hohen Schwingungsamplitude angeregt, um die an der Schwingquarz-Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordneten Resonator (16, 34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

13. Verfahren zur Messung der physikalischen Eigenschaften des Analysenfluids und/oder zumindest eines Analyts und/oder der Matrix des Analysenfluids mit einer Vorrichtung (10) gemäß einem der Ansprüche 1 bis 11,
**gekennzeichnet durch** folgende Verfahrensschritte:
a. Innerhalb der Messkammer wird die Resonator-Oberfläche des in Bezug zur Schwerkraft betrachtet unten im Gehäuse angeordneten Resonators mit Fängermolekülen vorbeschichtet;
b. An der mit Fängermolekülen vorbeschichteten Resonator-Oberfläche werden Trägerpartikel immobilisiert;
c. Das Analysenfluid wird in die Messkammer (40) eingebracht, so dass Teile des Analysenfluids an der Resonator-Oberfläche des in Bezug auf die Richtung der Schwerkraft betrachtet unten im Gehäuse angeordneten Resonators gebunden werden.
d. Die Messkammer (40) wird gespült, um restliche Bestandteile des Anlalysefluids aus der Messkammer (40) zu entfernen;
e. Die Anordnung wird jetzt **durch** eine Drehung um 180° so ausgerichtet, dass der Resonator mit gebundenen Trägerpartikel in Bezug zur Richtung der Schwerkraft oben im Gehäuse angeordnet ist.
f. Der in Bezug zur Richtung der Schwerkraft oben im Gehäuse angeordnete Resonator (34, 16) wird nun mit einer sehr hohen Schwingungsamplitude angeregt, um die an der Oberfläche angeordneten Trägerpartikel und die daran gebundenen Teile des Analysefluids zu lösen;
g. Die Trägerpartikel und die daran gebundenen Teile des Analysefluids fallen aufgrund der Schwerkraft auf den im Bezug zur Schwerkraft unten im Gehäuse angeordnete Resonator (16,34) und werden dort an der der Messkammer (40) zugewandten Oberfläche des Resonators (16, 34), insbesondere mittels spezifischen Fängermolekülen, gebunden;
h. Der in Bezug zur Richtung der Schwerkraft unten angeordnete Resonator wird in Schwingung versetzt und die Massenbelegung wird ermittelt.

## Claims

1. Device (10) for performing measurements of an analysis fluid, having a housing (12, 18) arranged in a mounting suspension, a measuring chamber (40) disposed within said housing (18), a first resonator (34), a second resonator (16), and lines (42, 44) for feeding and draining media for the measurements performed in said measuring chamber (40), said resonators (16, 34) delimiting certain zones of said measuring chamber (40), where, with respect to the direction of gravity, said first resonator (34) is arranged at the top of the housing and said second resonator (16) is mounted opposite said first resonator (34) at the bottom of the housing, with said first resonator (34) being designed as an actuator or a sensor, and said second resonator (16) being designed as a sensor or an actuator, **characterized in that** pivot pins (48, 50) are mounted on the side of the housing (12) about which said housing (12) can be rotated by at least 180 degrees relative to said mounting suspension, and that a control device as well as a motor which cooperates with said control device are provided, wherein said rotation is effected by the motor which cooperates with the control device.

2. Device according to claim 1, **characterized in that** said first and/or second resonators are detachably secured to said measuring chamber.

3. Device according to claims 1 or 2, **characterized in that** said two resonators (16, 34) delimit said measuring chamber with a resonator surface each, and that the resonator surfaces which face the measuring chamber have the same electrical potential.

4. Device according to one of claims 1 to 3, **characterized in that** said resonators (16, 34) each abut on a portion of said housing (18), in particular on a web (18a) of said housing (18).

5. Device according to claim 4, **characterized in that** said web (18a) is mounted in parallel to said resonators (16, 34) and completely laterally surrounds said measuring chamber (40).

6. Device according to claims 4 or 5, **characterized in that** said web (18a) includes the lines for feeding and draining media for the measurements performed in said measuring chamber (40).

7. Device according to one of the preceding claims, **characterized in that** said resonators (16, 34) are mounted in a carrier (16a, 34a) which radially encompasses each resonator (16, 34), that a sealant is provided between the carriers (16a, 34a) of the resonators (16, 34), more specifically between each carrier (16a, 34a) and the web (18a) of said housing (12).

8. Device according to claim 7, **characterized in that** said sealant is deposited on said carrier (16a, 34a) in the form of a layer.

9. Device according to claim 8, **characterized in that** said sealant is formed by silicone, more specifically by polydimethylsiloxane (PDMS).

10. Device according to one of the preceding claims, **characterized in that** at least one line (42, 44) which runs to the measuring chamber (40) passes through the zone (18a) of the housing (18) on which the carriers (16a, 34a) of the resonators abut.

11. Device according to one of the preceding claims, **characterized in that** said first resonator (16,34) is secured to the inside of the housing (12,18) by a closure mechanism (22, 38),

12. Method for measuring the physical properties of said analysis fluid and/or of at least one analyte and/or of the matrix of the analysis fluid, using a device (10) according to one of the preceding claims, **characterized by** the following procedural steps:
a. Outside said measuring chamber, immobilizing carrier particles to the resonator surface of one of the two resonators (34,16);
b. connecting said resonator (34, 16) to said measuring chamber (40) in such a way that the resonator surface to which carrier particles have been immobilized will reach into said measuring chamber;
c. introducing the analysis fluid into the measuring chamber (40) so as to cause part of the analysis fluid to bind to the resonator surface;
d. flushing the measuring chamber (40) in order to remove any remaining components of the analysis fluid from the measuring chamber (40);
e. aligning the arrangement, by rotating it by 180° if necessary, so as to arrange the resonator with the carrier particles bound thereto at the top of the housing, with respect to the direction of gravity;
f. exciting the resonator (34, 16) which is now arranged at the top of the housing, with respect to the direction of gravity, with a very high oscillation amplitude so as to loosen the carrier particles located on the surface of the quartz oscillator and the particles of the analysis fluid bound thereto;
g. due to gravity, the carrier particles and the particles of the analysis fluid bound thereto will then drop onto the resonator (16, 34) located at the bottom of the housing, with respect to the direction of gravity, where they will be bound to the surface of the resonator (16,34) which faces the measuring chamber (40), in particular by means of specific capture molecules;
h. the resonator which is located at the bottom, with respect to the direction of gravity, is then made to oscillate, and the mass per area is determined.

13. Method for measuring the physical properties of said analysis fluid and/or of at least one analyte and/or of the matrix of said analysis fluid, using a device (10) according to one of claims 1 to 11, **characterized by** the following procedural steps:
a. Inside said measuring chamber, precoating the surface of the resonator which is located at the bottom of the housing, with respect to the direction of gravity, with capture molecules;
b. immobilizing carrier particles to the resonator surface precoated with capture molecules;
c. introducing the analysis fluid into the measuring chamber (40) so as to cause part of the analysis fluid to be bound on the surface of the resonator which is located at the bottom of the housing, with respect to the direction of gravity;
d. flushing the measuring chamber (40) so as to remove any remaining components of the analysis fluid from the measuring chamber (40);
e. subsequently aligning the arrangement by rotating it by 180° so as to arrange the resonator having the carrier particles bound thereto at the top of the housing, with respect to the direction of gravity;
f. exciting the resonator (34, 16) now arranged at the top of the housing, with respect to the direction of gravity, with a very high oscillation amplitude so as to loosen the carrier particles and the parts of the analysis fluid bound thereto from its surface;
g. due to gravity, the carrier particles and the parts of the analysis fluid bound thereto will drop onto the resonator (16, 34) arranged at the bottom of the housing, with respect to the direction of gravity, where they will be bound to the surface of the resonator (16,34) which faces the measuring chamber (40), in particular by means of specific capture molecules;
h. the resonator which is located at the bottom, with respect to the direction of gravity, is then made to oscillate and the mass per area is determined.

## Revendications

1. Dispositif (10) en vue de l'exécution de mesures d'un fluide d'analyse, avec un boîtier (12, 18) disposé dans une suspension, une chambre de mesure (40) disposée dans le boîtier (18), un premier résonateur (34), un deuxième résonateur (16), et des conduites (42, 44) en vue de l'introduction et de l'évacuation de fluides pour les mesures dans la chambre de mesure (40), les résonateurs (16, 34) délimitant par zones la chambre de mesure (40), et par rapport au sens de la force de gravité, le premier résonateur (34) étant disposé en haut dans le boîtier et le deuxième résonateur (16) situé en face étant disposé en bas dans le boîtier, le premier résonateur (34) étant configuré comme acteur ou comme capteur et le second résonateur (16) étant configuré comme capteur ou comme acteur, **caractérisé en ce que,** sur le boîtier (12), sont disposés latéralement des pivots (48, 50), autour desquels le boîtier (12) est rotatif d'au moins 180 degrés par rapport à la suspension, et **en ce qu'**un dispositif de commande ainsi qu'un moteur fonctionnant conjointement avec ce dispositif de commande sont prévus, la rotation étant entraînée par le moteur fonctionnant conjointement avec le dispositif de commande.

2. Dispositif selon la revendication 1, **caractérisé en ce que** le premier et/ou second résonateur est fixé de manière amovible avec la chambre de mesure.

3. Dispositif selon les revendications 1 ou 2, **caractérisé en ce que** les deux résonateurs (16, 34) délimitent respectivement la chambre de mesure avec une surface de résonateur et les surfaces de résonateur tournées vers la chambre de mesure présentent un même potentiel électrique.

4. Dispositif selon une quelconque des revendications 1 à 3, **caractérisé en ce que** les résonateurs (16, 34) se respectivement appuient contre une partie du boîtier (18), notamment d'un étançon (18a) du boîtier (18).

5. Dispositif selon la revendication 4, **caractérisé en ce que** l'étançon (18a) est disposé parallèlement au résonateur (16, 34) complètement sur la périphérie et latéralement par rapport à la chambre de mesure (40).

6. Dispositif selon les revendications 4 ou 5, **caractérisé en ce que** l'étançon (18a) comprend les conduites (42, 44) en vue de l'introduction et de l'évacuation de fluides pour les mesures dans la chambre de mesure (40).

7. Dispositif selon une quelconque des revendications précédentes, **caractérisé en ce que** les résonateurs (16, 34) sont logés dans un support (16a, 34a) entourant radialement le résonateur (16, 34), **en ce que**, entre les supports (16a, 34a) des résonateurs (18, 34), notamment respectivement entre le support (16a, 34a) et l'étançon (18a) du boîtier (12), un moyen d'étanchéité est disposé.

8. Dispositif selon la revendication 7, **caractérisé en ce que** le moyen d'étanchéité est appliqué sous la forme d'une couche sur le support (16a, 34a).

9. Dispositif selon la revendication 8, **caractérisé en ce que** la couche est constituée par de la silicone, notamment par du polydiméthylsiloxane (PDMS).

10. Dispositif selon une quelconque des revendications précédentes, **caractérisé en ce que** à travers la zone (18a) du boîtier (18), à laquelle les supports (16a, 34a) des résonateurs s'appuient au moins une conduite (42, 44) est fait passer vers la chambre de mesure (40).

11. Dispositif selon une quelconque des revendications précédentes, **caractérisé en ce que** le premier résonateur (16, 34) est affermi dans le boîtier (12, 18) par l'intermédiaire d'un mécanisme de fermeture (22, 38).

12. Procédé en vue de la mesure des propriétés physiques du fluide d'analyse et/ou d'au moins un analyte et/ou de la matrice du fluide d'analyse avec un dispositif (10) selon une quelconque des revendications précédentes, **caractérisé par** les étapes de procédé suivantes :
a. En dehors de la chambre de mesure sont immobilisées des particules de support sur la surface de résonateur d'un des deux résonateurs (34, 16) ;
b. Le résonateur (34, 16) est relié avec la chambre de mesure (40) de manière à ce que la surface de résonateur immobilisée avec des particules de support pénètre dans la chambre de mesure ;
c. Le fluide d'analyse est introduit dans la chambre de mesure (40), de sorte que des parties du fluide d'analyse sont liées à la surface de résonateur ;
d. La chambre de mesure (40) est rincée, afin d'éliminer de la chambre de mesure (40) des éléments résiduels du fluide d'analyse ;
e. La disposition est maintenant configurée le cas échéant par une rotation de 180° de manière à ce que le résonateur soit disposé avec les particules de support liées en haut dans le boîtier par rapport au sens de la force de gravité.
f. Le résonateur (34, 16) disposé en haut dans le boîtier par rapport au sens de la force de gravité est maintenant excité avec une amplitude de vibrations très élevée, afin de détacher les particules de support disposées à la surface et les parties du fluide d'analyse qui y sont liées ;
g. Les particules de support et les parties du fluide d'analyse qui y sont liées tombent du fait de la force de gravité sur le résonateur (16, 34) disposé en bas dans le boîtier par rapport au sens de la force de gravité et elles y sont liées sur la surface du résonateur (16, 34) tournée vers la chambre de mesure (40), notamment au moyen de molécules de capture spécifiques ;
h. Le résonateur disposé en bas par rapport au sens de la force de gravité est mis en vibrations et la masse surfacique est calculée.

13. Procédé en vue de la mesure des propriétés physiques du fluide d'analyse et/ou d'au moins un analyte et/ou de la matrice du fluide d'analyse avec un dispositif (10) selon une quelconque des revendications 1 à 11, **caractérisé par** les étapes de procédé suivantes :
a. A l'intérieur de la chambre de mesure, la surface de résonateur du résonateur disposé en bas dans le boîtier vu par rapport au sens de la force de gravité est préalablement revêtue de molécules de capture ;
b. A la surface préalablement revêtue de molécules de capture de résonateur sont immobilisées des particules de support ;
c. Le fluide d'analyse est introduit dans la chambre de mesure (40), de sorte que des parties du fluide d'analyse sont liées à la surface de résonateur du résonateur disposé en bas dans le boîtier vu par rapport au sens de la force de gravité,
d. La chambre de mesure (40) est rincée, afin d'éliminer de la chambre de mesure (40) des éléments résiduels du fluide d'analyse ;
e. La disposition est maintenant alignée par une rotation de 180° de manière à ce que le résonateur avec les particules de support liées soit disposé en haut dans le boîtier par rapport au sens de la force de gravité.
f. Le résonateur (34, 16) disposé en haut dans le boîtier par rapport au sens de la force de gravité est maintenant excité avec une amplitude de vibrations très élevée, afin de détacher les particules de support disposées à la surface et les parties du fluide d'analyse qui y sont liées ;
g. Les particules de support et les parties du fluide d'analyse qui y sont liées tombent du fait de la force de gravité sur le résonateur (16,34) disposé en bas dans le boîtier par rapport au sens de la force de gravité et elles y sont liées sur la surface du résonateur (16, 34) tournée vers la chambre de mesure (40), notamment au moyen de molécules de capture spécifiques ;
h. Le résonateur disposé en bas par rapport au sens de la force de gravité est mis en vibrations et la masse surfacique est calculée.
